# EUROPEAN PATENT SPECIFICATION

(11) **EP 2 414 733 B1**
(45) Date of publication and mention of the grant of the patent: **25.09.2013**
(21) Application number: 10716643.1
(22) Date of filing: 29.03.2010
(51) Int. Cl.: F23B 30/08, F23H 11/10, F22B 31/00, F23B 80/02

(54) **STOKER-FIRED BOILER, METHOD OF MODERNISATION OF SUCH A BOILER AND A METHOD FOR REDUCING OF PARTICULATE MATTER EMISSION FROM SUCH A BOILER.**
ROSTKESSEL, VERFAHREN ZUR MODERNIZIERUNG VON EINEM SOLCHEN ROSTKESSEL UND VERFAHREN ZUR VERMINDERUNG VON PARTIKELEMISSIONEN AUS EINEM SOLCHEN ROSTKESSEL
CHAUDIÈRE Â ALIMENTATION MÉCANIQUE, PROCÉDÉ DE MODERNISATION DE LADITE CHAUDIÈRE ET PROCÉDÉ DE RÉDUCTION D'ÉMISSION DE MATIÈRE PARTICULAIRE PROVENANT D'UNE TELLE CHAUDIÈRE

(30) Priority: 30.03.2009 PL 38764509
(43) Date of publication of application: 08.02.2012
(73) Proprietor: Kowalewski, Witold, Ossowska 29 (PL)
(72) Inventor: Kowalewski, Witold, Ossowska 29 (PL)
(74) Representative: Adamczyk, Piotr
(86) International application number: PCT/PL2010/050013
(87) International publication number: WO 2010/114401

(56) References cited:
- GB-A- 973 244
- GB-A- 2 040 420

## Description

### Technical Field

The subject of this invention is a stoke-fired boiler, having a travelling grate located in its furnace zone and an under-the-grate space with blast zones, a method of modernisation of such a boiler and a method for reducing of particulate matter emission from such a boiler.

### Background Art

In the industrial power generation and heat generation industry stoke-fired boilers are commonly used for generation of process steam and hot heating water. In these boilers coal is combusted while staying on a travelling mechanical grate. Above the grate there is a combustion chamber to which usually a secondary air duct is connected, while under the grate there is an under-the-grate space comprising an under-the-grate box with blast zones, to which atmospheric air required for the combustion process is delivered.

GB 973 244A discloses a stoke-fire boiler having a mechanical travelling grate located in its furnace zone and a flue gases duct discharging the flue gases to the outside. Under upper section of this grate (so-called upper deck) a single common blast zone having main air duct delivering an atmospheric air (blast air) to the inside of the zone is located. Returning (lower) section of the grate (lower deck) passes through the single blast zone causing significant leakages of blast air. To reduce harmful loss of the blast air near end of the grate a special suction zone is located.

There is also known, for example from GB 2 040 420A, a stoker-fire boiler having the same mechanical travelling grate and number of separate blast zones located between forwarding upper deck of the grate and returning lower deck of the grate. In such boiler said harmful leakages of blast air are significantly reduced.

Flue gases generated during the combustion process are carried away to the flue gases particulate removal system as a results of negative pressure generated by an extract fan. In stoke-fired boilers a solid fuel is delivered onto one end of the upper grate surface, which will be referred to hereunder as "the grate beginning". Consequently, opposite end of the upper grate surface will be referred to hereunder "the grate end". Fuel put onto a grate moves along with the grate using oxygen contained in the air from the blast zones, so that in the end of this process there is practically only an ash at the grate end, which falls from the travelling grate to the discharge funnel Free falling ash causes in the grate end zone a large amount of fine particles to generate. The combustion process affects greatly the volume of emitted particulate matter. As the stream of air for combustion increases the particulate matter emission from the grate grows and a coarser particulate matter not so easily falls into the combustion chamber. Very important is the air stream reaching the rear grate part as in this space the particulate matter density is the smallest, therefore it is easily carried away, and in addition in the rear boiler part the quantity of particulate matter generated due to ash falling into the discharging funnel increases also. During combustion stoke-fired boilers emit relatively a lot of particulate matter and to reduce these amounts substantial investments are required. After 2015 the permissible particulate matter emission level will be 100 mg/m³ of a dry gas stream containing under normal conditions 6% of O₂ (100 mg/Nm³), what will call for the need to bear additional investments mainly for installation of electrostatic filters (1.5 - 3.0 million Polish zloty per boiler) or bag filter batteries (0.7 - 2.0 million Polish zloty per boiler). Operating these devices apart from high investment outlays will cause also operational costs to rise due to increased power consumption and the need for a periodical renewal of bag filters. Since the flue gases temperature must be increased to the value specified by the manufacturer of particulate matter removal systems operating these devices impacts indirectly negatively the boiler energy efficiency. Much less expensive particulate matter removal devices and installation are now commonly used - cyclones - which operate by the centrifugal force, however, they do not guarantee a permissible particulate matter emission level will be achieved, as according to the principle they operate by their effectiveness in removing fine particles is low.

### Disclosure of invention

The purpose of the invention is to decrease the load of particulate matter, especially of a fine particles in the flue gases stream emitted by a stoke-fired boiler.

A boiler according to the invention has a travelling mechanical grate located in its furnace zone, an under-grate space with number of separate blast zones located inside this space, a main air duct delivering an atmospheric air into these zones, and a flue gases duct discharging the flue gases to the outside. The under-grate space with the blast zones is located between forwarding upper deck of the grate and returning lower deck of the grate. Such boiler is characterised in that inside the under-grate space located under the end section of the forwarding upper deck of the grate of a length equalling from 10 to 40% of the total length of the forwarding upper deck of the grate there is at least one suction zone connected with the first end of a first additional air duct. The second end of the first additional air duct is connected with the negative pressure source, which generates in the suction zone a pressure lower than the pressure existing above the grate by a value of range from 5 to 100 Pa.

In first variant of the boiler according to the invention the blast zones and the at least one suction zones are located in a common under-grate box.

In another variant of the boiler according to the invention a fan is the source of the negative pressure.

In next variant of boiler according to the invention in the course of the flue gases duct there are connected in series at least one dust removal device and an extract fan. The extract fan generates the negative pressure and the second end of the first additional air duct is connected with the flue gases duct within its section located before the dust removing device.

In the above variant of the boiler the first additional air duct can comprise additionally an adjusting element, advantageously an adjusting throttle or an additional fan.

In next variant of the boiler according to the invention an outlet of the fan being the source of negative pressures is connected with the main air duct delivering atmospheric air into the blast zones.

In the variant of the boiler according to the invention, where a fan is a source of the negative pressure, in the course of the flue gases duct there are connected in series at least one dust removing device and an extract fan. In this variant an inlet of the fan being the source negative pressure is additionally connected with the flue gases duct within the duct section located before the dust removal device, and in the duct connecting the inlet of this fan with the flue gases duct there is an adjusting element, advantageously an additional fan or an adjusting throttle.

In next variant of the the invention the boiler contains additionally a secondary air fan, wherein both inlet of the secondary air fan and outlet of fan being the negative pressure source are connected with the main air duct before the blast fan.

In another variant of the invention the boiler contains additionally a secondary air fan, which inlet is connected with the first additional air duct before the fan being the negative pressure source.

In still another variant of the invention the boiler contains a second additional air duct connecting the under-the-grate space, located outside of blast zones and outside of the suction zones, with the first additional air duct.

A method of modernisation according to the invention relates to a stoker-fired boiler, which has a travelling mechanical grate located in its furnace zone, an under-grate space with number of separate blast zones located inside the space and a main air duct delivering an atmospheric air into these zones with help of a blast fan. The under-grate space with the blast zones is located between forwarding upper deck of the grate and returning lower deck of the grate. The method consists in that the last blast zone located at the end section of the grate is cut off from the main air duct and over a first additional air duct it is connected with an adjusted negative pressure source, which generates in the zone a pressure lower than the pressure existing above the grate by a value of range from 5 to 100 Pa.

In one variant of the modernisation method also the penultimate blast zone is cut off from the main air duct and the zone is connected with the adjusted negative pressure source.

In another variant of the modernisation method a fan is used as the negative pressure source.

In next variant of the modernisation method an outlet of the fan being the negative pressure source is connected with the main air duct delivering atmospheric air into the blast zones.In next variant of the modernisation the under-grate space located outside of blast zones is connected with a first additional air duct over a second additional air duct.

A method for reducing of particulate matter emission relates to combustion of solid fuels in a stoker-fired boiler, which has a travelling mechanical grate located in its furnace zone, an under-grate space with number of separate blast zones located inside the space and a main air duct delivering an atmospheric air into these zones with help of a blast fan. The under-grate space with the blast zones is located between forwarding upper deck of the grate and returning lower deck of the grate. According to the invention a pressure inside the under-the-grate space located under the end section of the forwarding upper deck of the grate, having a length equalling from 10 to 40% of the total length of the forwarding upper deck of the grate is lowered in relation to the pressure existing above the grate, and the pressure difference is maintained in the range from 5 to 100 Pa.

In one variant of the reduction method according to the invention said pressure difference is maintained in the range from 5 and 20 Pa, wherein the pressure difference is achieved with the help of a negative pressure source connected with the zone of the lowered pressure over an additional air duct.

In another variant of the reducing method said pressure difference is maintained in the range from 20 do 100 Pa.

In still another variant of the reducing method said pressure difference is generated with a fan connected with the zone of the lowered pressure over the additional air duct.

Implementation of this invention caused that the ash layer on the grate, and so far being one of the main sources of dustiness, started to act as an actual "filtration layer" trapping particulate matter hanging above it. Thanks to that an unexpected drop of the quantity of particulate matter emitted by a working boiler was achieved, this being especially true for fine particles, very difficult to eliminate with conventional dust removal systems. The achieved level of dustiness allows using such conventional systems even in situations, when permissible particulate matter emission levels shall be permanently lowered. Thus investment outlays for modern, very efficient but very costly dust removal devices such as electro filters or bag filters can be significantly reduced. Obviously this invention can be successfully used also for boilers with such dust removing devices as it significantly decreases the load on them.

### Brief Description of Drawings

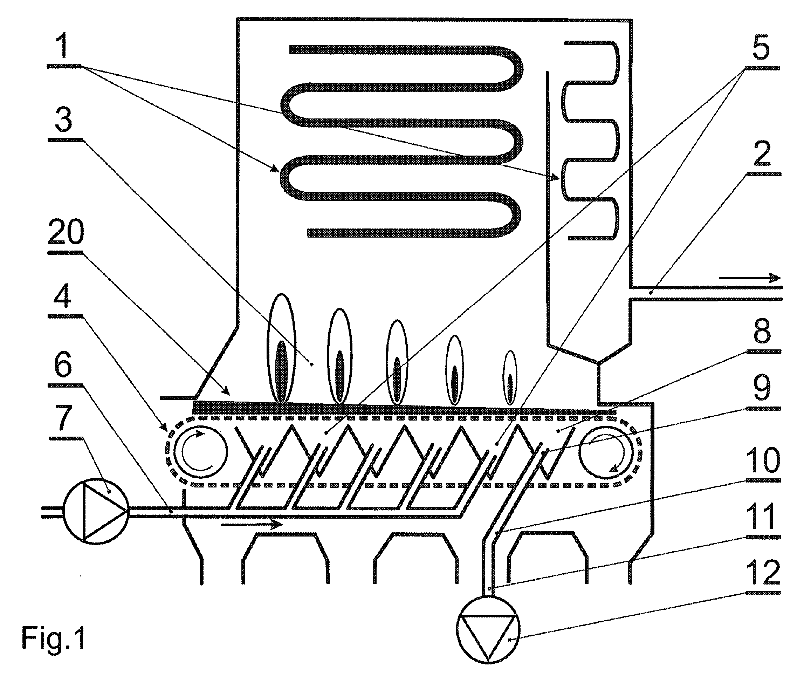

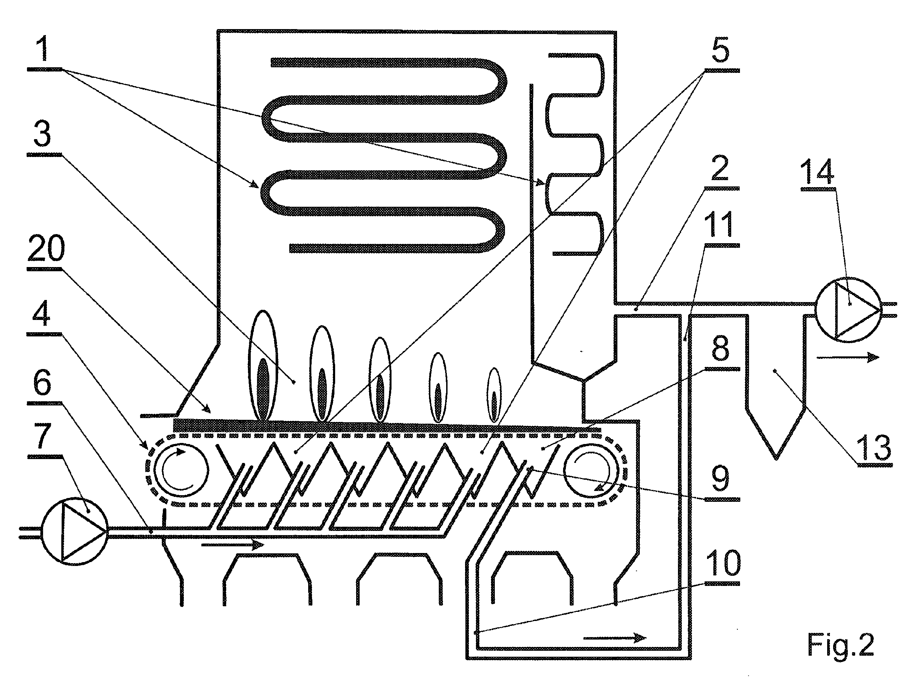

The invention is presented in a figures on drawing, schematically showing vertical cross-sections of stoker-fired boiler, where the Fig. 1 shows essence of a boiler according to the invention while Fig. 2 to 8 show seven different variants of the boiler.

### Mode for Carrying Out the Invention

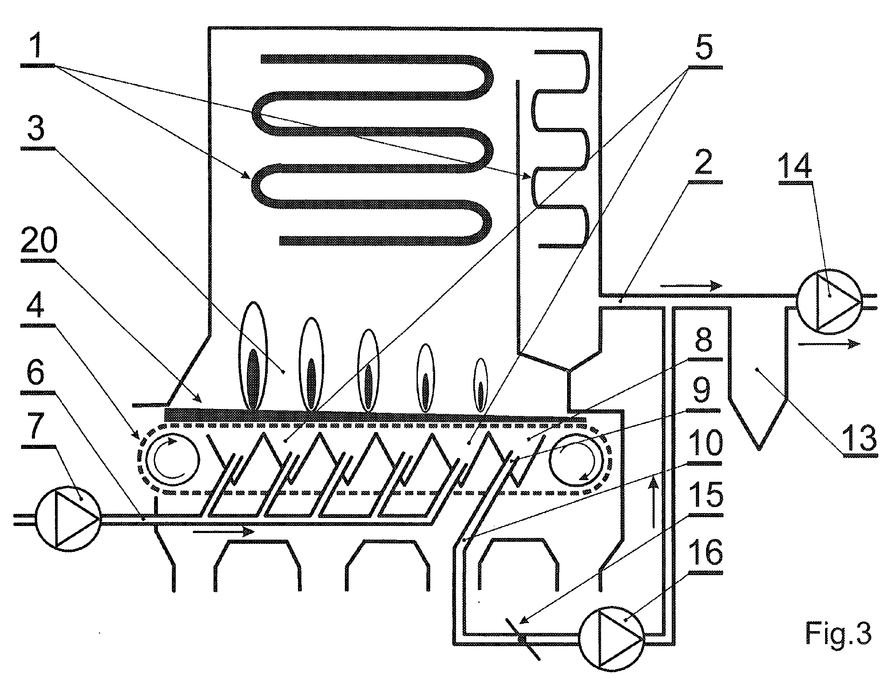

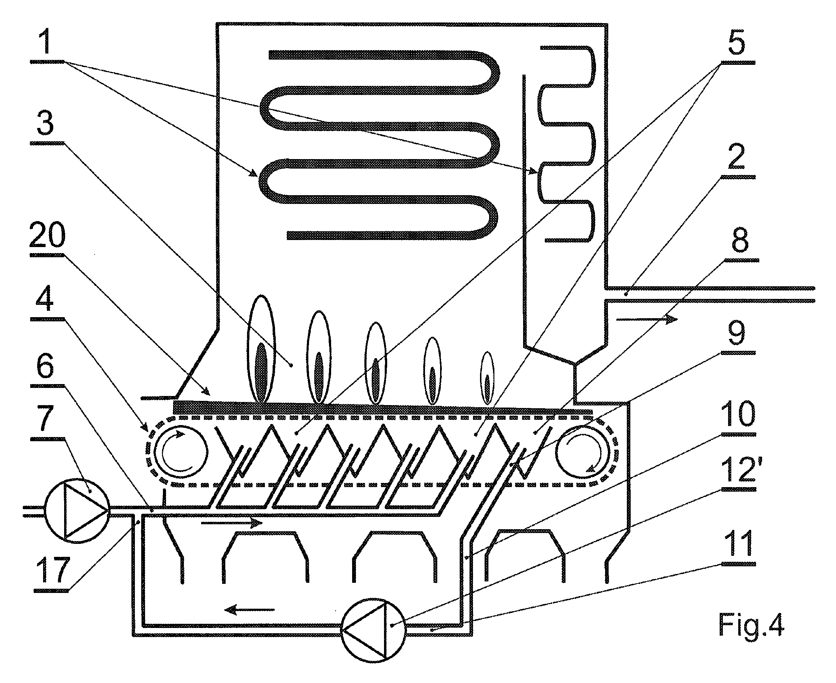

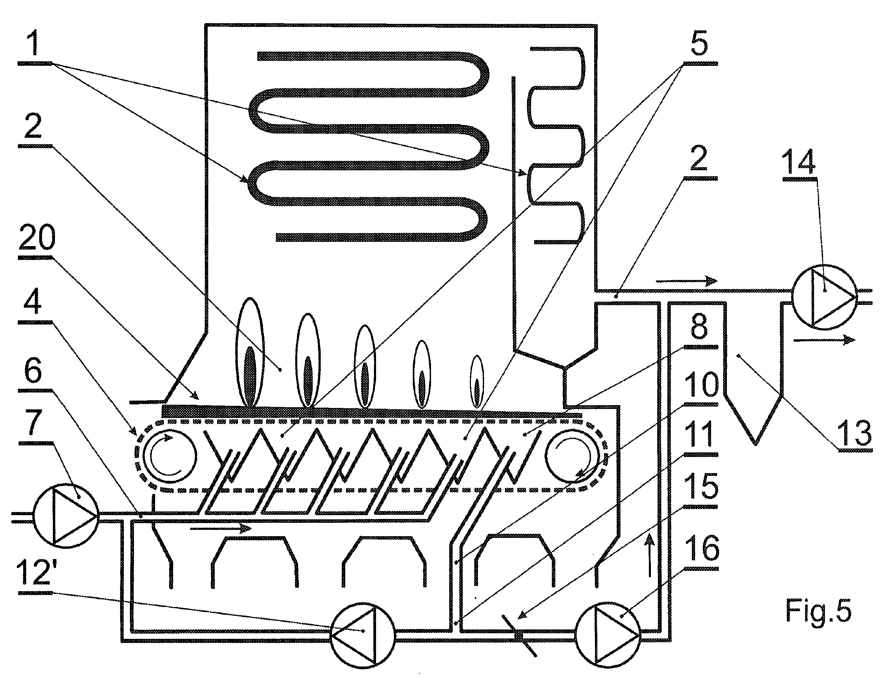

A typical stoker-fired boiler has a combustion zone with a heat exchanger 1 and with a flue gases duct 2 as well as a furnace zone. In the furnace zone there is a combustion chamber 3, a travelling mechanical grate 4 and an under-grate space located between forwarding upper deck of the grate and returning lower deck of the grate. In the under-grate space there are number of separate blast zones 5, which can constitute a part of the so-called under-the-grate box, and a main air duct 6 delivering atmospheric air to the blast zones 5 with the aid of a blast fan 7. In a boiler according to the invention (Fig. 1) in the under-grate space located before the end section of the forwarding upper deck of this grate 4, the length of which equals form 10 and 40% of the whole length of the forwarding upper deck of this grate, instead of blast zones 5 there is at least one suction zone 8, linked with the first end 9 of the first additional air duct 10. The second end 11 of the duct 10 is connected with the negative pressure source 12 generating in the suction zone 8 a pressure lower than the pressure above the grate 4 by a value ranging from 5 to 100 Pa. A typical negative pressure source 12 can be an electric adjusted speed fan. The suction zone 8 can constitute a separated element or be a part of a typical under-the-grate box. Typical stoker-fired boilers are provided with 4 to 7 blast zones (sections) so after implementation of the invention without changes done to the under-the-grate box design the pressure under the grate would be generated either at the place of the last originally blast zone or in the last two such zones. In another variant (Fig. 2) a boiler in which in the flue gases duct 2 there are connected in series at least one dusting removing device 13 and an extract fan 14, and just this fan serves as the negative pressure source 12 while the second end 11 of the first additional air duct 10 is connected with the flue gases duct 2 within the section before the dusting removing device 13. In some cases the negative pressure generated in the suction zone 8 by the extract fan 14 can be insufficient to the need and to cope with this a regulating throttle 15 or an additional fan 16 is mounted in the air duct 10 to support the operation of the extract fan 14 (Fig. 3). For a boiler variant showed in Fig. 4 the outlet 17 of the fan 12' being a source of the negative pressure 12 is connected with the main air duct 6 delivering atmospheric air to the inside of the blast zones 5. Also a solution (Fig. 5), which is a combination of solutions from Fig. 3 and Fig.4, is possible. In such combination the second end 11 of the duct 10 is connected both with the fan inlet 12' and with the flue gases duct 2. Also in that case between the flue gases duct 2, as the need may be, one applies either a regulation throttle 15 or an additional fan 16.

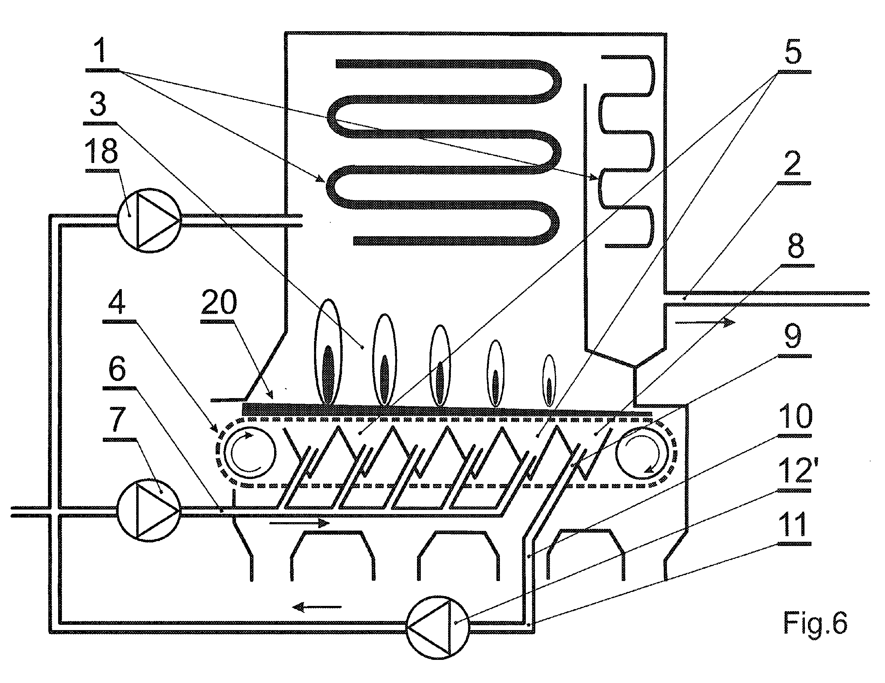

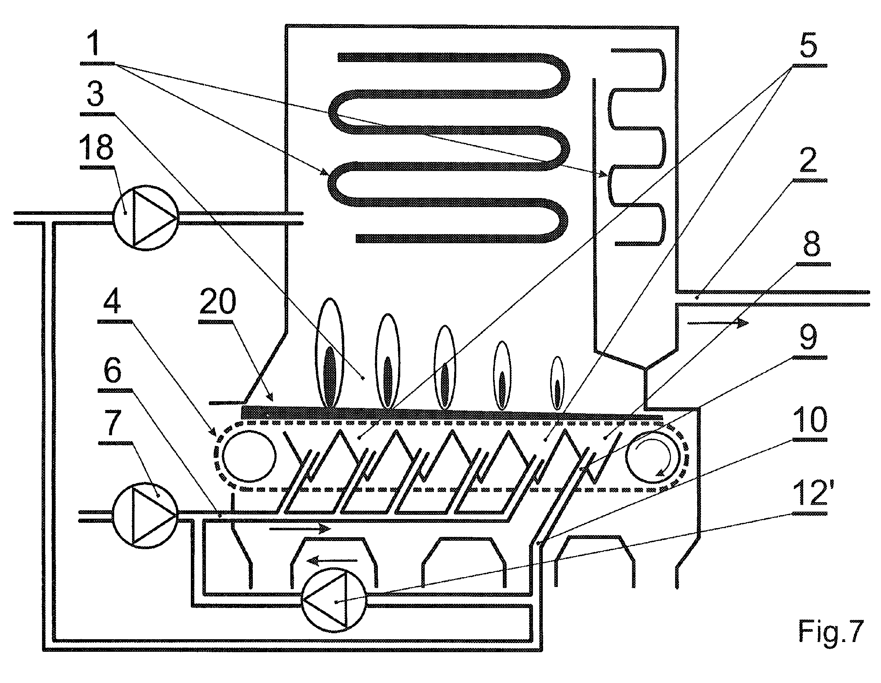

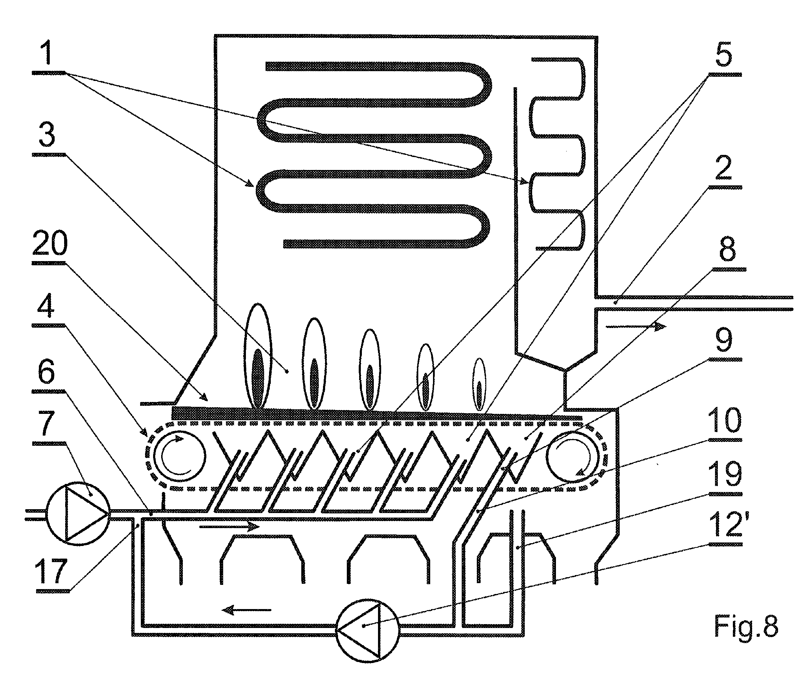

The present invention can be utilised also for boilers with a secondary air fan 18. In one variant (Fig. 6) of such a boiler both the secondary air fan inlet 18 and the fan outlet 12', which is the negative pressure source, are connected with the main air duct 6 before the blast fan 7. In second variant (Fig. 7) of such a boiler the secondary air fan inlet 18 is connected with the first additional air duct 10 before the fan 12' being the source of the negative pressure 12. The solution from the Fig. 4 can be supplemented by an second additional air duct 19, which connects the under-the-grate space located outside of the blast zones 5 and of the suction zones 8 with the first additional air duct (Fig. 8).

According to the invention new boilers can be built but equally inexpensively and quickly already existing boilers can be modernised. Exemplary, a modernisation of a popular boiler of the WR-10 type of a 11.6 MW output consists in cutting off the last blast zone 5 from the main air duct and connecting it over the duct 10 with a WWOax-28 type fan of an frequency converter adjusted speed. In this configuration this zone becomes a suction zone 8, and the fan connected with the zone constitutes the above described negative pressure source 12, allowing to generate and maintain in the suction zone 8 a pressure lower than the pressure above the grate by a value ranging from 5 and 100 Pa. If need be also the last but one blast zone 5 can be converted into the suction zone 8. If the grate is very long. not only one blast zone 5 should be converted into suction zone 8, but even two last blast zones 5.

The described above variants of affecting the negative pressure in suction zones by connecting in different ways ducts and fans can be realised also by modernisation of already existing boilers.

In order to achieve substantial particulate matter emission reductions during combustion of a solid fuel 20 on the travelling grate 4 the aforementioned reduction of the negative pressure under the grate 4 should take place along its end section of a length equalling from 10 to 40% of the total active length of the grate 4 with the level of the negative pressure depending on the kind of solid fuel 20 being burned in a boiler. For example, during burning of wood the required pressure difference ranges from 5 to 20 Pa, but a substantial reduction of the particulate emission, when burning coal, requires a pressure difference ranging from 20 to 100 Pa.

The measurement of the dustiness after the dust removing devices of a WR-10 type boiler, which has been modernised in the above described method, showed a particulate load between 50 and 80 mg/Nm³, with this level prior to modernisation having been between 200 to 300 mg/Nm³. With two WWOax-31.5 type fans used for a similar modernisation of a WR-25 boiler with the speed of these fans adjusted with frequency converters and with these fans installed symmetrically for the left and the right grate at an output of 17 MW, a drop in the particulate matter emission already before the dust removing device by a some 70% i.e. from the 470 mg/Nm³ level down to the 130 mg/Nm³ level was achieved. The efficiency of the modernisation according to the invention was confirmed also by particulate matter emission measurements after turning off the said fans; the dustiness rose at each time to the level prior to modernisation. The measurements of the air stream volume drawn from the last zone demonstrated that its temperature amounted to 120 - 150°C and the air stream contained from 17 to 19% of oxygen as well as traces of particulate matter, NOₓ and SO₂. A stream of air of such parameters fits for combustion at large and medium loads and at lower loads it can be directed directly to the flue gases duct without any detrimental effect (such as exceeded dew point) and to discharging and dust removal devices.

Implementation of the invention in already existing boilers resulted in an unexpected additional effect of even a twice as long interval between successive boiler cleanings and in reduction of the flue gases temperature by 20-40°C due to lower settling of particle matter on elements absorbing heat and in a lower flue gases velocity. That in consequence caused the boiler efficiency to rise by 1-2%. The invention allows also a visual inspection whether the combustion process proceeds properly by watching the space above the ash surface in the rear part of the boiler, an the space where ash drops to the discharge system. In a traditional stoke-fired boiler in such spaces there is a clearly visible dustiness preventing observation of ash on the grate with particle matter streaks moving from the back part of a boiler toward its middle part. The generation of said pressure difference causes extinction of the dustiness in the rear part of a boiler and few emerging dusty streaks shift to the rear part of the boiler. At boiler loads below 40% one can watch on the ash layer a dark layer of a freshly sedimented coarser particle matter. By watching the behaviour of a particle matter in the rear part of the boiler one can easily determine the pressure difference at which the desired filtration effect takes place. The measurement of this difference can be carried out e.g. with a pressure difference converter, the measuring points of which are located in the rear part of a boiler, or by measuring the pressure in the combustion chamber and in the last zone. Apart of utilising the measured pressure difference for adjusting the air stream flowing through the ash layer and the grate deck monitoring this value provides also information on changes in the fuel characteristics data, which manifest themselves in a change of ash parameters.

## Claims

1. A stoker-fired boiler, having a mechanical travelling grate (4) located in its furnace zone, an under-grate space with **number** of **separate** blast zones (5) **located inside this space,** a main air duct (6) delivering an atmospheric air to the inside of these blast zones (5) with help of a blast fan (7) and a flue gases duct (2) discharging the flue gases to the outside, **wherein the under-grate space with the blast zones (5) is located between forwarding upper deck of the grate and returning lower deck of the grate, *characterized in that*** inside the under-grate space located under the end section **of the forwarding upper deck** of the grate (4), having a length equalling from 10 to 40% of the total length **of the forwarding upper deck** of the grate (4), there is at least one suction zone (8) connected with the first end (9) of a first additional air duct (10), the second end (11) of which is connected with a negative pressure source (12) generating in the suction zone (8) a pressure lower than the pressure existing above the grate (4) by a value of range from 5 to 100 Pa.

2. The boiler according to claim 1, **characterized in that** the blast zones 5 and the at least one suction zones (8) are located in a common under-grate box.

3. The boiler according to claim 1 or 2, **characterized in that** the negative pressure source (12) is a fan (12', 14, 16).

4. The boiler according to claim 1 or 2, **characterized in that** in the course of the flue gases duct (2) there are connected in series at least one dust removal device (13) and an extract fan (14) being the negative pressure source (12), while the second end (11) of the first additional air duct (10) is connected with the flue gases duct (2) within its section located before a dust removal device (13).

5. The boiler according to claim 4, **characterized in that** the first additional air duct (10) comprises an adjusting element, advantageously an adjusting throttle (15) or an additional fan (16).

6. The boiler according to claim 3, **characterized in that** an outlet (17) of the fan (12') being the source of negative pressure (12), is connected with the main air duct (6) delivering an atmospheric air into the blast zones (5).

7. The boiler according to claim 6, **characterized in that** in the course of the flue gases duct (2) there are connected in series at least one dust removal device (13) and an extract fan (14), wherein an inlet of the fan (12') being the source of negative pressure (12) is additionally connected with the flue gases duct (2) within its section located before the dust removal device, and in the duct connecting the inlet of the fan (12') with the flue gases duct (2) there is an adjusting element, advantageously an additional fan (16) or an adjusting throttle (15).

8. The boiler according to claim 6, **characterized in that** it contains additionally a secondary air fan (18), wherein both inlet of the secondary air fan (18) and outlet of the fan (12') being the negative pressure source (12) are connected with the main air duct (6) before the blast fan (7).

9. The boiler according to claim 6, **characterized in that** it contains an additional secondary air fan (18) which inlet is connected with the first additional air duct (10) before the fan (12') being the source of negative pressure.

10. The boiler according to claim 6, **characterized in that** it contains a second additional air duct (19) connecting the under-grate space, located outside of the blast zones (5) and outside of the suction zones (8), with the first additional air duct (10).

11. A method of modernisation of a stoker-fired boiler having a travelling mechanical grate (4) located in its furnace zone, an under-grate space with **number** of **separate** blast zones (5) **located inside the space** and a main air duct (6) delivering an atmospheric air into these blast zones (5) with the help of a blast fan (7), **wherein the under-grate space with the blast zones (5) is located between forwarding upper deck of the grate and returning lower deck of the grate** ***characterized in that*** the last blast zone (8) **located at the end section of the grate** is cut off from the main air duct (6) and over a first additional air duct (10) this zone (8) is connected with an adjusted negative pressure source (12) generating in this zone (8) a pressure lower than the pressure existing above the grate (4) by a value of range from 5 to 100 Pa.

12. The method of modernisation according to claim 11, **characterized in that** also the penultimate blast zone is cut off from the main air duct (6) and connected with the adjusted negative pressure source (12).

13. The method of modernisation according to claim 11 or 12, **characterized in that** a fan (12', 14, 16).is used as the of negative pressure source (12).

14. The method of modernisation according to claim 13, **characterized in that** an outlet of the fan (12') being the source of negative pressure (12) is connected with the main air duct (6) delivering atmospheric air to the inside of blast zones (5).

15. The method of modernisation according to claim 14, **characterized in that** the under-grate space located outside of the blast zones (5) is connected with the first additional air duct (10) over a second additional air duct (19).

16. A method for reducing of the particle matter emission during burning of solid fuels in a stoker-fired boiler having a mechanical travelling grate (4) located in its furnace zone, an under-grate space with **number** of **separate** blast zones (5) **located inside the space** and a main air duct (6) delivering an atmospheric air into the these blast zones (5) with help of a blast fan (7), **wherein the under-grate space with the blast zones (5) is located between forwarding upper deck of the grate and returning lower deck of the grate, *characterized in that* a pressure** in**side** the under-grate space located under the end section **of the forwarding upper deck** of the grate (4), having a length equalling from 10 to 40% of the total length **of the forwarding upper deck** of the grate (4) is lowered in relation to the pressure existing above the grate (4) and the pressure difference is maintained in the range from 5 to 100 Pa, wherein the pressure difference is achieved with the help of a negative pressure source (12) connected with the zone of the lowered pressure over an additional air duct (10).

17. The method for reducing of the particle matter emission according to claim 16, **characterized in that** the maintained pressure difference is in the range from 5 to 20 Pa.

18. The method for reducing of the particle matter emission according to claim 16, **characterized in that** the maintained pressure difference is in the range from 20 to 100 Pa.

19. The method for reducing of the particle matter emission according to one of claims 16, 17 and 18 **characterized in that** the pressure difference is achieved with the help of a fan (12', 14, 16) connected with the zone of the lowered pressure over the additional air duct (10).

## Patentansprüche

1. Rostkessel mit dem mechanischen Wanderrost (4) der sich in dessen Ofenzone befindet, mit dem unter-dem-Rost-Raum mit einer Reihe von separaten Windzonen (5), die sich innerhalb dieses Raumes befinden, mit dem Haupt-Luftkanal (6) der atmosphärische Luft ins Innere von diesen Windzonen (5) mit Hilfe eines Windgebläses (7) liefert und mit dem Abgaskanal (2) der die Abgase nach außen fördert, wobei sich der unter-dem-Rost-Raum mit den Windzonen (5) zwischen dem weiterleitenden Oberdeck des Rostes und dem zurückführenden Unterdeck des Rostes befindet, **dadurch gekennzeichnet, dass** innerhalb des unter-dem-Rost-Raumes der unter dem Endabschnitt des weiterleitenden Oberdecks des Rostes (4) mit einer Länge von 10 bis 40% der gesamten Länge des weiterleitenden Oberdeck des Rostes (4) angebracht ist, sich mindestens eine Saugzone (8) befindet, die mit dem ersten Ende (9) des zusätzlichen Luftkanals verbunden ist, wobei das zweite Ende (11) des Luftkanals mit der Quelle des negativen Druckes (12) verbunden ist, welche Quelle innerhalb der Saugzone (8) ein Druck erzeugt, der um ein Wert von 5 bis 100 Pa unter dem oberhalb des Rostes (4) existierenden Druck liegt.

2. Rostkessel nach Anspruch 1, **dadurch gekennzeichnet, dass** die Windzonen (5) und
wenigstens eine von diesen Windzonen (8) sich in dem gemeinsamen unter-dem-Rost-Box befindet.

3. Rostkessel nach Anspruch 1 oder 2, **dadurch gekennzeichnet, dass** die Quelle des negativen Druckes (12) ein Gebläse (12', 14, 16) ist.

4. Rostkessel nach Anspruch 1 oder 2, **dadurch gekennzeichnet, dass** im Zuge des Abgaskanal (2) sich seriengeschaltete mindestens ein staubentfernendes Gerät (13) und das Abzugsgebläse (14) als die Quelle des negativen Druck (12) befinden, wobei das zweite Ende (11) des ersten zusätzlichen Luftkanals (10) mit dem Abgaskanal (2) verbunden ist, und wobei der Anschlusspunkt auf dem Luftkanal-Abschnitt vor dem staubentfernendes Gerät (13) liegt.

5. Rostkessel nach Anspruch 4, **dadurch gekennzeichnet, dass** der erste zusätzliche Luftkanal (10) das regulierende Element, vorzugsweise ein regelndes Ventil (15), oder das zusätzliche Gebläse (16), enthält.

6. Rostkessel nach Anspruch 3, **dadurch gekennzeichnet, dass** der Ausgang (17) des Gebläses (12') als die Quelle des negativen Druckes (12) mit dem Hauptluftkanal (6), der die Luft zu den Windzonen (5) liefert, verbunden ist.

7. Rostkessel nach Anspruch 6, **dadurch gekennzeichnet, dass** im Laufe des Abgaskanals (2) sich parallelgeschaltet, wenigstens ein staubentfernendes Gerät (13) und das Abzugsgebläse (14) befinden, wobei der Eingang zu dem Gebläse (12') als die Quelle des negativen Druckes (12) zusätzlich an den Abgaskanal anschließt (2), wobei der Anschlusspunkt auf dem Luftkanal-Abschnitt vor dem staubentfernendes Gerät (13) liegt und im Kanal der der Gebläse-Eingang (12') mit dem Abgaskanal (2) verbindet gibt es das regelnde Element, vorzugsweise ein Gebläse (16), oder ein regulierendes Ventil (15).

8. Rostkessel nach Anspruch 6, **dadurch gekennzeichnet, dass er** zusätzlich das sekundäre Luftgebläse (18) enthält, wobei beides der Eingang in das sekundäre Luftgebläse (18) und der Gebläseausgang (12') als die Quelle des negativen Druckes (12) mit dem Hauptluftkanal (6) vor dem Windgebläse (7) verbunden sind.

9. Rostkessel nach Anspruch 6, **dadurch gekennzeichnet, dass** er das zusätzliches sekundäres Luftgebläse (18) enthält dessen Eingang mit dem ersten zusätzlichen Luftkanal (10) vor dem Gebläse (12') als die Quelle des negativen Druck verbunden ist.

10. Rostkessel nach Anspruch 6, **dadurch gekennzeichnet, dass** er den zweiten zusätzlichen Luftkanal (19) enthält, der der außerhalb der Windzonen (5) und außerhalb der Saugzonen (8) befindlichen Unter-dem-Rost-Raum mit dem ersten zusätzlichen Luftkanal (10) verbindet.

11. Verfahren zur Modernisierung des Rostkessel mit dem mechanischen Wanderrost (4) der sich der sich in dessen Ofenzone befindet, mit dem Unter-dem-Rost-Raum mit einer Reihe von separaten Windzonen (5) im diesen Raum und mit dem Hauptluftkanal (6) der die atmosphärische Luft zu diesen Windzonen (5) mit Hilfe von dem Windgebläse (7) liefert, wobei der Unter-dem-Rost-Raum und die Windzonen (5) sich zwischen dem weiterleitenden Oberdeck des Rostes und dem zurückleitenden Unterdeck des Rostes befinden, **dadurch gekennzeichnet, dass** die sich an dem letzten Abschnitt des Rostes befindliche letzte Windzone (8) von dem Hauptluftkanal (6) abgeschnitten ist, und wo diese Zone (8) über der erste zusätzliche Luftkanal (10) mit der Quelle des negativen Druck (12) verbunden ist, wobei die genannte Quelle ein Druck erzeugt, der um ein Wert von 5 bis 100 Pa unter dem oberhalb des Rostes (4) existierenden Druck liegt.

12. Verfahren zur Modernisierung nach Anspruch 11, **dadurch gekennzeichnet, dass** auch die vorletzte Windzone von dem Hauptluftkanal (6) abgeschnitten ist und mit der Quelle des zu regelnden negativen Druckes verbunden ist.

13. Verfahren zur Modernisierung nach Anspruch 11 oder 12, **dadurch gekennzeichnet, dass** das Gebläse (12', 14, 16) als die Quelle des negativen Druckes (12) dient.

14. Verfahren zur Modernisierung nach Anspruch 13, **dadurch gekennzeichnet, dass** der Ausgang des Gebläses (12) als die Quelle des negativen Druckes mit dem Hauptluftkanal (6), der die atmosphärische Luft ins Innere der Windzonen (5) liefert, verbunden ist.

15. Verfahren zur Modernisierung nach Anspruch 14, **dadurch gekennzeichnet, dass** der sich außerhalb der Windzonen (5) befindlicher Unter-dem-Rost-Raum mit dem ersten zusätzlichen Luftkanal über den zweiten zusätzlichen Luftkanal (19) verbunden ist.

16. Verfahren zur Verminderung von Partikelemissionen bei der Verbrennung von soliden Kraftstoffen in dem Rostkessel mit dem mechanischen Wanderrost (4) der sich in dessen Ofenzone befindet, mit dem Unter-dem-Rost-Raum mit einer Reihe von separaten Windzonen (5), die sich innerhalb dieses Raumes befinden und mit dem Hauptluftkanal (6) der die atmosphärische Luft zu diesen Windzonen (5) mit Hilfe vom Windgebläse (7) liefert, wobei der Unter-dem- Rost-Raum mit den Windzonen (5) sich zwischen dem weiterleitenden Oberdeck des Rostes und dem rückführenden Unterdeck des Rostes befindet, **dadurch gekennzeichnet, dass** der Druck innerhalb des unter-dem-Rost-Raumes der sich unter dem letzten Abschnitt des weiterleitenden Oberdeck des Rostes (4) von einer Länge von 10 bis 40% des Gesamtlänge des weiterleitenden Oberdeck des Rostes, befindet, gegenüber dem Druck der über dem Rost (4) existiert gesenkt ist, wobei der Druckunterschied innerhalb des Bereiches zwischen 5 und 100 Pa beibehalten wird.

17. Verfahren zur Verminderung von Partikelemissionen nach Anspruch 16, **dadurch gekennzeichnet, dass** der gehaltene Druckunterschied zwischen 5 bis 20 Pa liegt.

18. Verfahren zur Verminderung von Partikelemissionen nach Anspruch 16, **dadurch gekennzeichnet, dass** der aufrechterhaltene Druckunterschied zwischen 20 bis 100 Pa beträgt.

19. Verfahren zur Verminderung von Partikelemissionen gemäß eines von den Ansprüchen 16, 17 und 18, **dadurch gekennzeichnet, dass** der Druckunterschied mittels des Gebläses (12', 14, 16) erzeugt wird, wobei dieses Gebläse mit der Zone des gesenktes Druck über dem zusätzlichen Luftkanal (10) verbunden ist, wobei der Druckunterschied mit Hilfe von der Quelle des negativen Druckes (12) erzeugt wird und wobei die genannte Quelle mit der Zone des gesenkten Druckes über den zusätzlichen Luftkanal (10) verbunden ist.

## Revendications

1. Une chaudière à grille mécanique, disposant d'un système de déplacement mécanique de grille (4) située dans sa zone de four, une zone sous-grille avec plusieurs zones de soufflage séparées (5) situés à l'intérieur de cet espace, un conduit d'air principal (6) délivrant un air atmosphérique à l'intérieur de ces zones de soufflage (5) à l'aide d'un ventilateur de soufflage (7) et un conduit de fumée de gaz (2) évacuant les gaz de combustion vers l'extérieur, dans lequel l'espace sous-grille avec les zones de soufflage (5) se trouve entre la transmission du pont supérieur de la grille et en retournant plate-forme inférieure de la grille, **caractérisé en ce que** l'intérieur de l'espace sous-grille située sous la section d'extrémité de la plate-forme supérieure d'acheminement de la grille (4), ayant une longueur égale à 10 à 40% de la longueur totale de la plate-forme supérieure d'acheminement de la grille (4), il y a au moins une zone d'aspiration (8) reliée à la première extrémité (9) d'un premier conduit d'air supplémentaire (10), la seconde extrémité (11) est reliée à une source de pression négative (12) de génération dans la zone d'aspiration (8) d'une pression inférieure à la pression régnant au-dessus de la grille (4) d'une valeur dans la plage de 5 à 100 Pa.

2. La chaudière selon la revendication 1, **caractérisée en ce que** les zones de soufflage (5) et au moins une des zones d'aspiration (8) sont situées dans une boîte commune sous-grille.

3. La chaudière selon la revendication 1 ou 2, **caractérisée en ce que** la source de pression négative (12) est un ventilateur (12', 14, 16).

4. La chaudière selon la revendication 1 ou 2, **caractérisée en ce que** sur le cheminement du conduit des gaz (2) sont connectés en série au moins un dispositif de dépoussiérage (13) et un ventilateur d'extraction (14) étant la source de pression négative (12), tandis que la seconde extrémité (11) du premier conduit d'air supplémentaire (10) est reliée avec le conduit de fumée de gaz (2) dans sa partie située avant un dispositif de dépoussiérage (13).

5. La chaudière selon la revendication 4, **caractérisée en ce que** le premier conduit d'air additionnel (10) comprend un élément de réglage, avantageusement un papillon de réglage (15) ou un ventilateur supplémentaire (16).

6. La chaudière selon la revendication 3, **caractérisée en ce qu'**une sortie (17) du ventilateur (12') étant la source de pression négative (12), est reliée à la conduite d'air principale (6) délivrant un air atmosphérique dans les zones de soufflage (5).

7. La chaudière selon la revendication 6, **caractérisée en ce que** sur le cheminement du conduit des gaz (2) sont connectés en série au moins un dispositif de dépoussiérage (13) et un ventilateur d'extraction (14), dans lequel une entrée du ventilateur (12 ') étant la source de pression négative (12) est en outre reliée avec le conduit de fumée de gaz (2) dans sa partie située en amont du dispositif de dépoussiérage, et dans la conduite reliant l'entrée du ventilateur (12') avec le conduit de fumée de gaz (2), il y a un élément de réglage, avantageusement un ventilateur supplémentaire (16) ou un papillon de réglage (15).

8. La chaudière selon la revendication 6, **caractérisée en ce qu'**elle contient en outre un ventilateur d'air secondaire (18), dans lequel à la fois le ventilateur secondaire (18) et la sortie du ventilateur (12') étant la source de pression négative (12) sont reliés à la conduite d'air principale (6) avant le ventilateur de soufflage (7).

9. La chaudière selon la revendication 6, **caractérisée en ce qu'**elle contient un ventilateur d'air secondaire supplémentaire (18) dont l'entrée est reliée à la première conduite d'air supplémentaire (10) avant le ventilateur (12') étant la source de pression négative.

10. La chaudière selon la revendication 6, **caractérisée en ce qu**'elle contient un deuxième conduit supplémentaire d'air (19) reliant l'espace sous-grille, situé à l'extérieur de la zone de soufflage (5) et à l'extérieur des zones d'aspiration (8), avec le premier conduit d'air supplémentaire (10).

11. Le procédé de modernisation de la chaudière à grille mécanique disposant d'un système de déplacement mécanique de grille (4) située dans sa zone du four, un espace sous-grille avec plusieurs zones de soufflage séparées (5) situées à l'intérieur de l'espace et un conduit d'air principal (6) délivrant un air atmosphérique dans ces zones de soufflage (5) à l'aide d'un ventilateur de soufflage (7), dans lequel l'espace sous-grille avec les zones de soufflage (5) se trouve entre la transmission du pont supérieur de la grille et en retournant pont inférieure de la grille, **caractérisée en ce que** la dernière zone de soufflage (8) située à la section d'extrémité de la grille est coupée de la conduite d'air principale (6) et sur un premier canal d'air supplémentaire (10) de cette zone (8) est relié à la source de pression négative adjusté (12) de génération dans cette zone (8) d'une pression inférieure à la pression présente au-dessus de la grille (4) d'une valeur dans la plage de 5 à 100 Pa.

12. Le procédé de modernisation selon la revendication 11, **caractérisé en ce que** également l'avant-dernière zone de souffle est coupée de la conduite d'air principale (6) et reliée à la source de pression négative réglée (12).

13. Le procédé de modernisation selon la revendication 11 ou 12, **caractérisé en ce qu**'un ventilateur (12', 14, 16) est utilisé comme la source de pression négative (12).

14. Le procédé de modernisation selon la revendication 13, **caractérisé en ce qu**'une sortie du ventilateur (12') étant la source de pression négative (12) est reliée à la conduite d'air principale (6) délivrant de l'air atmosphérique à l'intérieur des zones de soufflage (5).

15. Le procédé de modernisation selon la revendication 14, **caractérisé en ce que** l'espace sous-grille située à l'extérieur des zones de soufflage (5) est relié avec le premier conduit d'air supplémentaire (10) au-dessus d'un second conduit d'air supplémentaire (19).

16. Le procédé de réduction de l'émission de matière particulaire au cours de la combustion de combustibles solides dans une chaudière à grille mécanique ayant un déplacement mécanique de grille (4) située dans sa zone de four, un espace sous-grille avec plusieurs zones de soufflage séparées (5) situé à l'intérieur l'espace et d'un conduit d'air principal (6) délivrant un air atmosphérique dans ces zones de soufflage (5) à l'aide d'un ventilateur de soufflage (7), dans lequel l'espace sous-grille avec les zones de soufflage (5) se trouve entre la transmission du pont supérieur de la grille et en retournant pont inférieure de la grille, **caractérisé en ce qu**'une pression à l'intérieur de l'espace sous-grille situé sous la section d'extrémité de la plate-forme supérieure d'acheminement de la grille (4), ayant une longueur égale à 10 à 40% de la longueur totale de la plate-forme supérieure d'acheminement de la grille (4) est abaissée par rapport à la pression régnant au-dessus de la grille (4) et la différence de pression est maintenue dans la plage de 5 à 100 Pa.

17. Le procédé de réduction de l'émission de matière particulaire selon la revendication 16, **caractérisé en ce que** la différence de pression maintenue entretenue est de l'ordre de 5 à 20 Pa.

18. Le procédé de réduction de l'émission de matière particulaire selon la revendication 16, **caractérisé en ce que** la différence de pression maintenue entretenue est de l'ordre de 20 à 100 Pa.

19. Le procédé de réduction de l'émission de matière particulaire selon l'une des revendications 16, 17 et 18, **caractérisé en ce que** la différence de pression est obtenue à l'aide d'un ventilateur (12 ', 14, 16) relié à la zone de pression réduite sur le conduit d'air supplémentaire (10), dans lequel la différence de pression est obtenue à l'aide d'une source de pression négative (12) reliée à la zone de pression réduite sur une conduite d'air supplémentaire (10).
